# EUROPÄISCHE PATENTSCHRIFT

(11) **EP 4 374 030 B1**
(45) Veröffentlichungstag und Bekanntmachung des Hinweises auf die Patenterteilung: **19.02.2025**
(21) Anmeldenummer: 22743496.6
(22) Anmeldetag: 18.07.2022
(51) Int. Cl.: E04G 21/08, H01M 50/256, A45F 3/08, B25F 5/02

(54) **RÜCKENTRAGVORRICHTUNG**
BACK SUPPORT DEVICE
DISPOSITIF DE SUPPORT DORSAL

(30) Priorität: 20.07.2021 EP 21186547
(43) Veröffentlichungstag der Anmeldung: 29.05.2024
(73) Patentinhaber: Hilti Aktiengesellschaft, 9494 Schaan (LI)
(72) Erfinder: JANECKE, Andreas, 86899 Landsberg am Lech (Pitzling) (DE); HAMMERS, Johannes, 9490 Vaduz (LI)
(74) Vertreter: Hilti Aktiengesellschaft Corporate Intellectual Property
(86) Internationale Anmeldenummer: PCT/EP2022/070017
(87) Internationale Veröffentlichungsnummer: WO 2023/001739

(56) Entgegenhaltungen:
- EP-A2- 3 462 518
- CN-U- 208 088 846
- JP-A- 2018 100 567

## Beschreibung

Die vorliegende Erfindung betrifft eine Rückentragvorrichtung mit einer Traggurteinheit und einer Akkupackaufnahme zur Aufnahme eines Akkupacks, der zur Energieversorgung eines handgeführten Innenrüttlers vorgesehen ist. Der Innenrüttler weist vorzugsweise einen elastisch verformbaren Schutzschlauch auf.

EP 3 462 518 A2 offenbart eine Rückentragvorrichtung.

EP 3 605 784 A1 offenbart eine Tragvorrichtung, mit einem Tragrahmen und einem von dem Tragrahmen getragenen Energiespeicher.

DE 10 2004 001 550 A1 offenbart eine elektrische Handwerkzeugmaschine, mit zumindest einem akkugespeisten und mittels einer Trageinheit auf dem Rücken eines Benutzers platzierbaren Elektromotor, mittels dessen über eine biegsame Welle ein Abtriebswerkzeug antreibbar ist, wobei die Trageinheit Führungsmittel aufweist, die an der biegsamen Welle derart angreifen, dass diese ausgehend vom Rückenbereich des Benutzers im Schulterbereich abrutschsicher festgelegt ist.

Es ist Aufgabe der vorliegenden Erfindung eine Rückentragvorrichtung anzugeben, die eine erhöhte Benutzersicherheit und einen erhöhten Benutzerkomfort begünstigt.

Die Aufgabe wird mit einer Rückentragvorrichtung gemäß Anspruch 1 gelöst.

Die Erfindung schließt die Erkenntnis ein, dass ein handgeführter Innenrüttler typischerweise recht schwer und dessen Verwendung dementsprechend für einen Benutzer beschwerlich ist. Dies kann längerfristig zu einer gesundheitlichen Beeinträchtigung des Benutzers führen. Zudem wurde erkannt, dass die Oberfläche bereits verdichteten Betons durch Kontakt mit dem Schutzschlauch beschädigt werden kann, was zu erforderlichen Nacharbeiten führt.

Dadurch, dass der der Schutzschlauch lastabtragend über eine Schulter eines Benutzers der Rückentragvorrichtung geführt werden kann, wird eine Vermeidung dieser Nachteile begünstigt. Ein Teil der vertikalen Last des Innenrüttlers kann, vermittelt über den nun in der Schlauchführung geführten Schutzschlauch, in die Rückentragvorrichtung eingeleitet werden. Dies ist rückenschonend für den Benutzer. Zudem kann die Schlauchführung ein idealerweise vertikal zu erfolgendes Einführen einer Rüttelflasche des Innenrüttlers in den zu verdichteten Beton begünstigen.

In einer besonders bevorzugten Ausgestaltung ist die Schlauchführung ausgebildet, den Schutzschlauch entlang seiner Längsrichtung beweglich zu belassen. Es hat sich als vorteilhaft herausgestellt, wenn die Schlauchführung ausgebildet ist, den Schutzschlauch in horizontaler Richtung beweglich zu belassen, insbesondere an einer Kontaktstelle oder Kontaktzone zwischen Schutzschlauch und Schlauchführung.

Erfindungsgemäß weist die Rückentragvorrichtung ein von der Traggurteinheit verschiedenes und/oder an der Traggurteinheit angeordnetes Gehäuse auf. Die Schlauchführung ist an dem

Gehäuse angeordnet. Das Gehäuse kann haubenförmig ausgebildet sein. Es hat sich als vorteilhaft herausgestellt, wenn das Gehäuse mit der Akkupackaufnahme fluchtet.

In einer besonders bevorzugten Ausgestaltung weist die Traggurteinheit zwei Schultergurte und/oder eine Basisplatte auf. In einer weiteren besonders bevorzugten Ausgestaltung ist die Basisplatte an der Traggurteinheit befestigt, insbesondere wiederlösbar befestigt. Es hat sich als vorteilhaft herausgestellt, wenn die Basisplatte, bezogen auf eine horizontale Richtung beim bestimmungsgemäßen Gebrauch der Traggurteinheit, mittig an der Traggurteinheit angeordnet ist. Es hat sich weiterhin als vorteilhaft herausgestellt, wenn die Schlauchführung von den Schultergurten, insbesondere in vertikaler Richtung, beabstandet ist. In einer weiteren besonders bevorzugten Ausgestaltung erfolgt ein Lastabtrag des Schutzschlauchs und/oder der Schlauchführung hin zu einem Benutzer über die Basisplatte.

In einer besonders bevorzugten Ausgestaltung ist die Schlauchführung in das Gehäuse integriert. Es hat sich als vorteilhaft herausgestellt, wenn die Schlauchführung einstückig mit dem Gehäuse ausgebildet ist. In einer besonders bevorzugten Ausgestaltung besteht das Gehäuse und/oder die Schlauchführung aus Kunststoff oder weist Kunststoff auf. Es hat sich als vorteilhaft herausgestellt, wenn der Kunststoff ein Thermoplast ist, welches vorzugsweise mittels Spritzgießverfahren zu dem Gehäuse und/oder der Schlauchführung verarbeitet worden ist.

In einer weiteren besonders bevorzugten Ausgestaltung weist die Schlauchführung zumindest eine Gleitoberfläche auf. Es hat sich als vorteilhaft herausgestellt, wenn die Gleitoberfläche einen Gleitreibungskoeffizienten Gummi (Schutzschlauch) auf Kunststoff (Schlauchführung) in trockenem Zustand zwischen 0,2 und 0,4 nach DIN EN ISO 8295 aufweist. Die Schlauchführung kann mit einer Gleitoberfläche ausgestattet sein, aufweisend einen Kunststoff aus der Gruppe: Polyamid, Polyacetal Copolymer, Polyethylenterephthalat, Polytetrafluorethylen.

In einer besonders bevorzugten Ausgestaltung weist die Schlauchführung eine konvexe Oberfläche auf. Die Schlauchführung kann eine zumindest abschnittsweise gekrümmte Oberfläche aufweisen. Es hat sich als vorteilhaft herausgestellt, wenn sich die Oberfläche über eine überwiegende Breite des Gehäuses erstreckt. Die Oberfläche kann, in horizontaler Richtung, beidseitig durch jeweils einen Stehkragen begrenzt sein. Derart kann ein seitliches Abrutschen des Schutzschlauchs von der Schlauchführung vermieden werden.

Erfindungsgemäß weist die Schlauchführung eine Auslegerschiene zur abschnittsweise Aufnahme des Schutzschlauchs auf. Ein Lastabtrag des Schutzschlauchs erfolgt vorzugsweise über diese Auslegerschiene. In einer besonders bevorzugten Ausgestaltung weist die Auslegerschiene ein u-förmiges Profil auf. Es hat sich als vorteilhaft herausgestellt, wenn die Auslegerschiene verschwenkbar und/oder versetzbar bezüglich des Gehäuses am Gehäuse angeordnet ist. Die Auslegerschiene kann in ein oder mehreren Freiheitsgraden bezüglich des Gehäuses verschwenkbar sein. Es hat sich als vorteilhaft herausgestellt, wenn die Auslegerschiene arretierbar ausgebildet ist. Insbesondere kann vorgesehen sein, dass ein oder mehrere Freiheitsgrade der Auslegerschiene bedarfsweise durch einen Benutzer gesperrt werden können. In einer besonders bevorzugten Ausgestaltung weist das Gehäuse eine Mehrzahl definierter Aufnahmezonen für die Auslegerschiene auf. Es hat sich als vorteilhaft herausgestellt, wenn die Aufnahmezone eine Ausnehmung aufweist, in den korrespondierender Zapfen der Auslegerschiene eingreifen kann. Vorzugsweise erfolgt ein Eingriff ohne merkliches Spiel oder mit kaum merklichen Spiel. Die Ausnehmung kann eine an der Ausnehmung ausgebildete Orientierungsnut aufweisen, die vorzugsweise eine nicht rotationssymmetrische Ausgestaltung der Ausnehmung bedeutet. Derart kann eine bestimmte Schwenkwinkellage für die Auslegerschiene festgelegt sein. Verschiedene Ausnehmungen können unterschiedlich winkelorientierte Orientierungsnuten aufweisen.

In einer weiteren besonders bevorzugten Ausgestaltung weist die Auslegerschiene wenigstens eine Transportrolle auf. Es hat sich als vorteilhaft herausgestellt, wenn die Transportrolle innerhalb eines durch die Auslegerschiene aufgespannten Volumens angeordnet ist. Die Auslegerschiene kann eine Länge von wenigstens 30 cm aufweisen.

In einer weiteren besonders bevorzugten Ausgestaltung ist die Akkupackaufnahme unterhalb der Schlauchführung angeordnet. Es hat sich als vorteilhaft herausgestellt, wenn die Schlauchführung, in vertikaler Richtung, den höchsten Punkt der Traggurteinheit zumindest abschnittsweise überragt.

Die Aufgabe wird ebenfalls gelöst durch ein Innenrüttelsystem mit einer vorbeschriebenen Rückentragvorrichtung und mit eine handgeführten Innenrüttler, der über einen elastisch verformbaren Schutzschlauch mit der Rückentragvorrichtung verbunden oder zu verbinden ist, wobei dem Innenrüttler einen Elektromotor zugeordnet ist. Das Innenrüttelsystem kann durch mit Bezug auf die Rückentragvorrichtung beschriebenen Merkmale weitergebildet sein.

In einer besonders bevorzugten Ausgestaltung ist der Elektromotor in der Rückentragvorrichtung angeordnet. In einer weiteren besonders bevorzugten Ausgestaltung weist der Schutzschlauch eine durch den Elektromotor angetriebene mechanische Antriebswelle auf. Alternativ zu einer Anordnung des Elektromotor in der Rückentragvorrichtung, kann der Elektromotor in einer Rüttelflasche des Innenrüttlers angeordnet sein. Es hat sich als vorteilhaft herausgestellt, wenn der Schutzschlauch ein elektrische Kabel umfasst oder ein solches ist. In einer besonders bevorzugten Ausgestaltung ist der Elektromotor über das elektrische Kabel mit dem Akkupack verbunden.

In einer weiteren besonders bevorzugten Ausgestaltung weist das Innenrüttelsystem einen in der Akkupackaufnahme aufgenommenen oder aufzunehmenden Akkupack auf, mittels dem der Elektromotor des Innenrüttlers elektrisch versorgt werden kann.

Weitere Vorteile ergeben sich aus der folgenden Figurenbeschreibung. In den Figuren sind besonders bevorzugte Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen, gemäß der Ansprüche.

In den Figuren sind gleiche und gleichartige Komponenten mit gleichen Bezugszeichen beziffert. Es zeigen:
- Figur 1: ein erstes bevorzugtes Ausführungsbeispiel einer Rückentragvorrichtung,
- Figur 2: das Ausführungsbeispiel der Figur 1 aus einen anderen Blickwinkel,
- Figur 3: ein zweites bevorzugtes Ausführungsbeispiel einer Rückentragvorrichtung; und
- Figur 4: das Ausführungsbeispiel der Figur 3 aus einen anderen Blickwinkel.

### Ausführungsbeispiel:

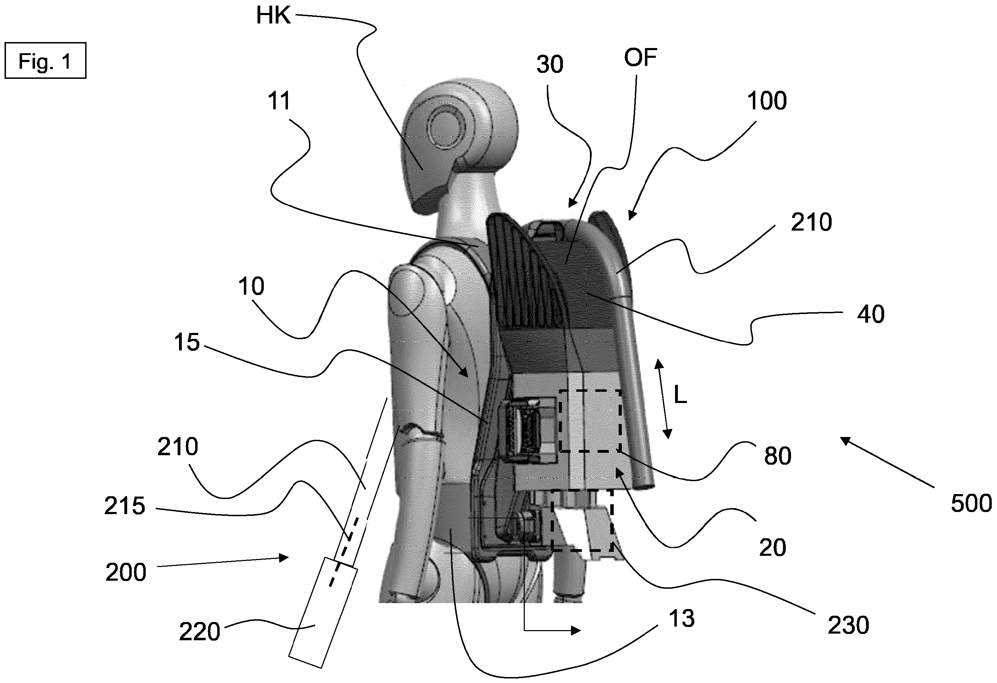

Ein erstes bevorzugtes Ausführungsbeispiel einer erfindungsgemäßen Rückentragvorrichtung 100 ist in Figur 1 dargestellt.

Die Rückentragvorrichtung 100 ist ausgestattet mit einer Traggurteinheit 10 und einer Akkupackaufnahme 20 zur Aufnahme eines Akkupacks 80 (gestrichelt dargestellt, da innerhalb Akkupackaufnahme 20 angeordnet.) Das Akkupack 80, der Akkupackaufnahme 20 aufgenommen ist, dient der Energieversorgung eines handgeführten Innenrüttlers 200, wobei der Innenrüttler 200 einen elastisch verformbaren Schutzschlauch 210 aufweist.

Die Traggurteinheit 10 weist ihrerseits zwei Schultergurte 11 und eine mit den Schultergurten verbundene Basisplatte 15 auf. Die Akkupackaufnahme 20 ist mit der Basisplatte 15 verbunden, so dass die Last des Akkupacks 80, vermittelt durch die Basisplatte 15 und die zwei Schultergurte 11, gleichmäßig auf einen Benutzer HK der Rückentragvorrichtung 100 abgeleitet werden kann. Die Traggurteinheit 10 ist beispielhaft mit einem Hüftgurt 13 ausgestattet, um eine weiter verbesserte Lastverteilung zu realisieren.

Die Rückentragvorrichtung 100, der handgeführte Innenrüttler 200 sowie der Akkupack 80 sind Teil eines Innenrüttelsystems 500. Im vorliegend dargestellten Ausführungsbeispiel ist dem Innenrüttler 200 ein Elektromotor 230 zugeordnet, der in der Rückentragvorrichtung 100 (hier beispielhaft unterhalb der Akkupackaufnahme 20) angeordnet ist. Der Elektromotor 230 wird durch den Akkupack 80 elektrisch versorgt. Der elastisch verformbare Schutzschlauch 210 enthält eine biegsame mechanische Antriebswelle 215, über welche eine Drehbewegung des Elektromotor 230 an eine hier nicht dargestellte Unwuchtmasse einer Rüttelflasche 220 des Innenrüttlers 200 übertragen wird.

In einem alternativen, hier nicht dargestellten Ausführungsbeispiel, kann der Elektromotor in der Rüttelflasche des Innenrüttlers angeordnet sein. In diesem Fall umfasst der Schutzschlauch ein elektrisches Kabel, über welches der Elektromotor mit dem Akkupack verbunden ist.

Wie der Figur 1 entnommen werden kann, weist die Rückentragvorrichtung 100 eine Schlauchführung 30 auf, mittels welcher der Schutzschlauch 210 lastabtragend über eine Schulter des Benutzers HK der Rückentragvorrichtung 100 geführt ist. Dabei ist die Schlauchführung 30 ausgebildet, den Schutzschlauch 210 entlang seiner Längsrichtung L beweglich zu belassen.

Die Rückentragvorrichtung 100 weist ein von der Traggurteinheit 10 verschiedenes und an der Traggurteinheit 10 angeordnetes Gehäuse 40 auf, wobei die Schlauchführung 30 an dem Gehäuse 40 angeordnet ist. Im hier dargestellten ersten bevorzugten Ausführungsbeispiel ist die Schlauchführung 30 einstückig mit dem Gehäuse 40 ausgebildet. Beispielhaft besteht das Gehäuse 40 aus einem ABS-Kunststoff, der mittels Spritzgießens zu dem Gehäuse 40 geformt wurde. Das Gehäuse 40 ist haubenförmig ausgebildet, wobei die einstückig mit dem Gehäuse 40 ausgebildete Schlauchführung 30 eine konvexe Oberfläche OF aufweist. Die konvexe Oberfläche OF folgt einer Krümmung der Schultergurte 11, welche sich während des bestimmungsgemäßen Gebrauchs der Rückentragvorrichtung 100 die Schultern des Benutzers HK anschmiegen. Mit anderen Worten kann es vorteilhaft sein, wenn die konvexe Oberfläche OF, bezogen auf die Lage und/oder Ausprägung ihrer Krümmung, den Schultern und/oder dem Rücken des Benutzers HK nachempfunden ist.

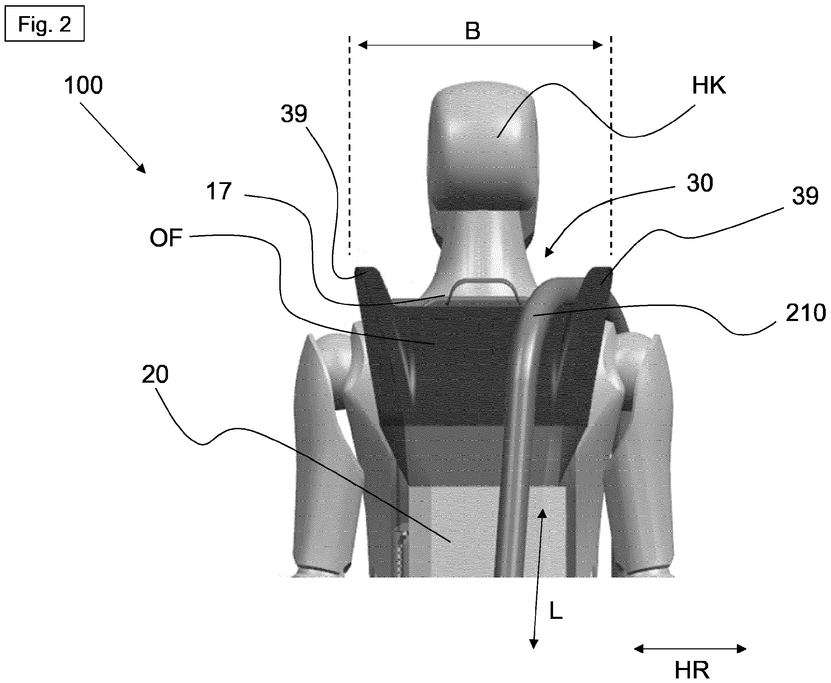

Wie der Figur 2 entnommen werden kann, erstreckt sich die konvexe Oberfläche OF über einen überwiegenden Teil der Breite B des Gehäuses 40. Dabei ist die konvexe Oberfläche OF, in horizontaler Richtung HR, beidseitig durch jeweils einen Stehkragen 39 begrenzt. Dadurch wird ein seitliches Abrutschens des Schutzschlauchs 210 von der Schlauchführung 30 verhindert. Die derart ausgestaltete Oberfläche OF ermöglicht, dass Schutzschlauch 210 entlang seiner Längsrichtung L beweglich belassen wird, mit anderen Worten liegt der Schutzschlauch 210 aufgrund der Schwerkraft auf der Oberfläche OF der Schlauchführung 30 auf und kann entlang dieser gleiten. Insbesondere ist der Schutzschlauch 210 in einer Kontaktzone zwischen Schutzschlauch 210 und Schlauchführung 30 nicht an der Schlauchführung 30 fixiert. Somit wird ein Eintrag von Vibrationen von dem Schutzschlauch 210 in die Rückentragvorrichtung 100 zumindest zu einem gewissen Grad vermieden.

Dadurch, dass sich die konvexe Oberfläche OF über einen überwiegenden Teil der Breite B des Gehäuses 40 erstreckt, besitzt der Schutzschlauch 210 auch einen Freiheitsgrad in horizontaler Richtung HR. Der Benutzer kann den Schutzschlauch 210 somit auch leicht verschieben, beispielsweise im Zuge eines Umlegens des Schutzschlauchs 210 auf die linke Schulter.

Die Rückentragvorrichtung 100 weist einen an der Basisplatte 15 befestigten Handgriff 17 auf mittels dem die Rückentragvorrichtung 100 komfortabel, beispielsweise in auf die Ladefläche eines Fahrzeugs, gehoben werden kann.

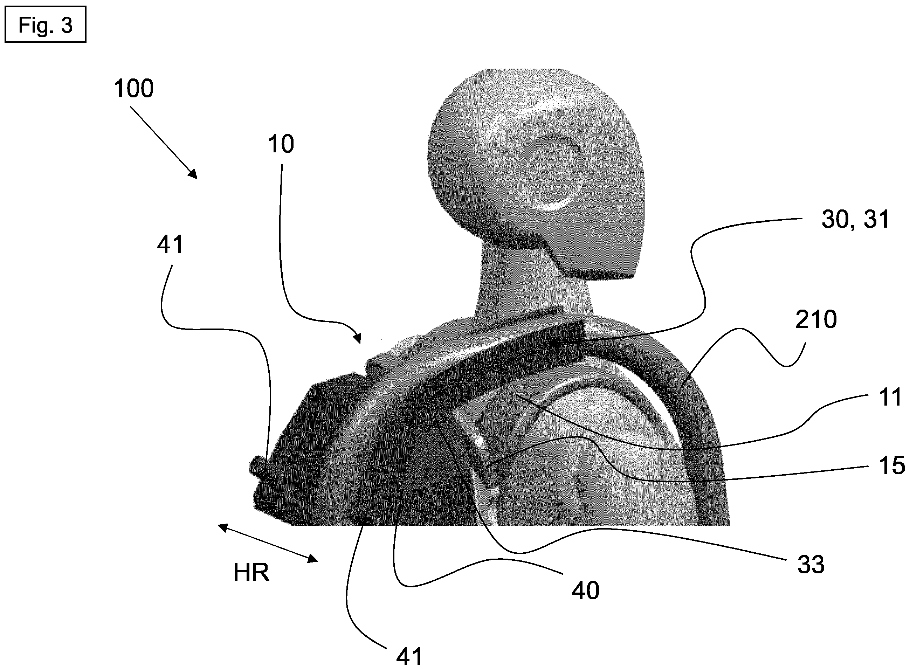

Ein zweites bevorzugtes Ausführungsbeispiel einer erfindungsgemäßen Rückentragvorrichtung 100 ist in Figur 3 dargestellt. Die Rückentragvorrichtung 100 weist ein von der Traggurteinheit 10 verschiedenes und an der Basisplatte 15 der Traggurteinheit 10 befestigtes Gehäuse 40 auf, wobei die Schlauchführung 30 an dem Gehäuse 40 angeordnet ist. Die Schlauchführung 30 weist zwecks lastabtragender Führung des Schutzschlauchs 210 eine Auslegerschiene 31 auf.

Die Auslegerschiene 31 ist an dem Gehäuse 40 wiederlösbar befestigt. Um ein seitliches Abrutschen (in horizontaler Richtung HR) des Schutzschlauchs 210 vom Gehäuse 40 zu verhindern, weist das Gehäuse 40 zwei Begrenzungsstutzen 41 auf. Ein seitliches Abrutschen (in horizontaler Richtung HR) des Schutzschlauchs 210 von der Auslegerschiene 31 wird dadurch vermieden, dass die Auslegerschiene 31 ein u-förmiges Profil aufweist in dem der Schutzschlauchs 210 zumindest abschnittsweise aufgenommen ist.

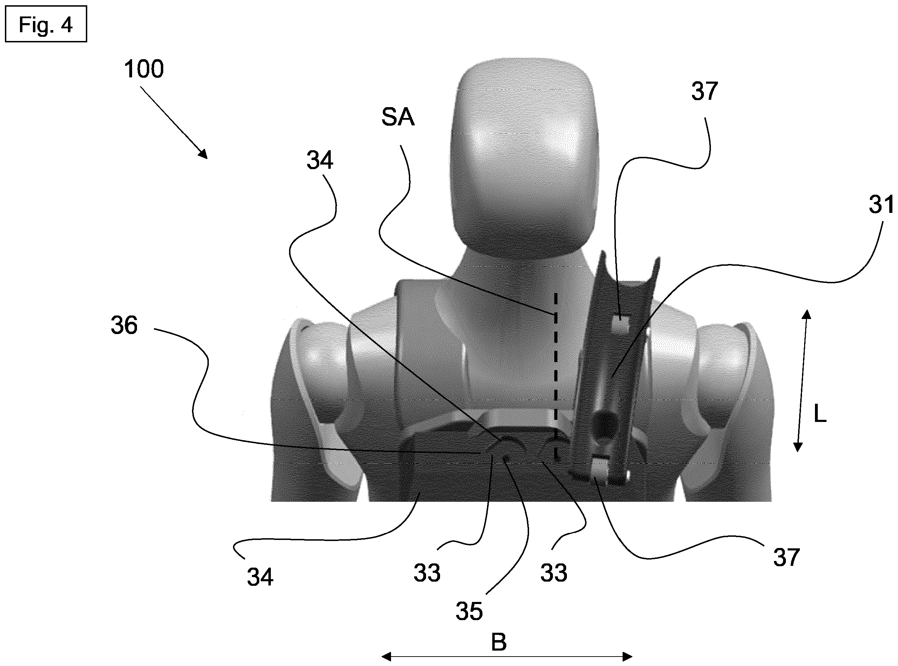

Bevorzugterweise ist die Auslegerschiene 31 versetzbar bezüglich des Gehäuses 40 am Gehäuse 40 angeordnet. Dies soll mit Bezug auf Figur 4 näher erläutert werden. Das Gehäuse 40 weist eine Mehrzahl definierter Aufnahmezonen 33 für die Auslegerschiene 31 auf. Jede der Aufnahmezonen 33 weist wiederum eine Ausnehmung 34 auf in die ein hier nicht dargestellter korrespondierender Zapfen der Auslegerschiene 31 ohne merkliches Spiel oder mit kaum merklichen Spiel eingreifen kann. Mittels eines hier nicht dargestellten Haltestifts an der Unterseite der Auslegerschiene 31 kann die Auslegerschiene 31 gegen ein Herausrutschen gesichert werden, beispielsweise durch Einrasten des hier nicht dargestellten Haltestifts in einer zentral angeordneten Stiftaufnahme 35 der Aufnahmezone 33. Jede der Aufnahmezonen 33 definiert eine Verankerungsposition der Auslegerschiene 31 entlang einer Breite B des Gehäuses 40. Somit ist die Auslegerschiene 31 versetzbar bezüglich des Gehäuses 40 am Gehäuse 40 angeordnet.

Ein Verbringen der Auslegerschiene 31 in eine definierte Schwenkposition (jeweils bezogen auf eine koaxial zur Stiftaufnahme verlaufende Schwenkachse SA) kann beispielsweise durch eine kreisförmig ausgebildete Ausnehmung 34 der Aufnahmezone 33 realisiert werden. In diesem Fall verbleibt die Auslegerschiene 31 in ein- und derselben Ausnehmung 34 liegen und ist nach Art eines Drehkrans um die Schwenkachse SA der eingenommenen Ausnehmung 34 variabel schwenkbar. Andererseits kann durch eine an der Ausnehmung 34 ausgebildete Orientierungsnut 36, die eine nicht rotationssymmetrische Ausgestaltung der Ausnehmung 34 bedeutet, eine bestimmte Schwenkwinkellage für die Auslegerschiene 31 festgelegt sein. Die Ausnehmungen 34 können unterschiedlich winkelorientierte Orientierungsnuten aufweisen.

Wie der Figur 4 ebenfalls entnommen werden kann, weist die Auslegerschiene 31 ein u-förmiges Profil auf in dem der Schutzschlauchs 210 (vgl. Figur 3) zumindest abschnittsweise aufgenommen ist. Die Auslegerschiene 31 wenigstens zwei Transportrolle 37 auf, die Führen des Schutzschlauchs 210 in Längsrichtung L begünstigen.

### Bezugszeichenliste

- 10: Traggurteinheit
- 11: Schultergurt
- 13: Hüftgurt
- 15: Basisplatte
- 17: Handgriff
- 20: Akkupackaufnahme
- 30: Schlauchführung
- 31: Auslegerschiene
- 33: Aufnahmezone
- 34: Ausnehmung
- 35: Stiftaufnahme
- 36: Orientierungsnut
- 37: Transportrolle
- 39: Stehkragen
- 40: Gehäuse
- 41: Begrenzungsstutzen
- 80: Akkupack
- 100: Rückentragvorrichtung
- 200: Innenrüttler
- 210: Schutzschlauch
- 220: Rüttelflasche
- 215: Antriebswelle
- 230: Elektromotor
- 500: Innenrüttelsystem
- B: Breite des Gehäuses
- HK: Benutzer
- HR: horizontale Richtung
- L: Längsrichtung
- OF: Oberfläche
- SA: Schwenkachse

## Patentansprüche

1. Rückentragvorrichtung (100) mit einer Traggurteinheit (10) und einer Akkupackaufnahme (20) zur Aufnahme eines Akkupacks (80) zur Energieversorgung eines handgeführten Innenrüttlers (200), wobei der Innenrüttler (200) einen elastisch verformbaren Schutzschlauch (210) aufweist,
**wobei** die Rückentragvorrichtung (100) eine Schlauchführung (30) aufweist, mittels welcher der Schutzschlauch (210) lastabtragend über eine Schulter eines Benutzers (HK) der Rückentragvorrichtung (100) geführt werden kann, wobei die Rückentragvorrichtung (100) ein von der Traggurteinheit (10) verschiedenes und/oder an der Traggurteinheit (10) angeordnetes Gehäuse (40) aufweist,
**dadurch gekennzeichnet, dass**
die Schlauchführung (30) an dem Gehäuse (40) angeordnet ist,
wobei
die Schlauchführung (30) eine Auslegerschiene (31) aufweist, die vorzugsweise verschwenkbar und/oder versetzbar bezüglich des Gehäuses (40) am Gehäuse (40) angeordnet ist..

2. Rückentragvorrichtung (100) nach Anspruch 1,
**dadurch gekennzeichnet, dass** die Schlauchführung (30) ausgebildet ist, den Schutzschlauch (210) entlang seiner Längsrichtung (L) beweglich zu belassen.

3. Rückentragvorrichtung (100) nach Anspruch 1,
**dadurch gekennzeichnet, dass** die Schlauchführung (30) in das Gehäuse (40) integriert ist, insbesondere einstückig mit dem Gehäuse (40) ausgebildet ist.

4. Rückentragvorrichtung (100) nach Anspruch 3,
**dadurch gekennzeichnet, dass** die Schlauchführung (30) eine vorzugsweise konvex ausgebildete Oberfläche (OF) aufweist, die sich vorzugsweise über einen überwiegenden Teil der Breite (B) des Gehäuses (40) erstreckt.

5. Rückentragvorrichtung (100) nach Anspruch 4,
**dadurch gekennzeichnet, dass** die Oberfläche (OF), in horizontaler Richtung (HR), beidseitig durch jeweils einen Stehkragen (39) begrenzt ist.

6. Rückentragvorrichtung (100) nach Anspruch 1,
**dadurch gekennzeichnet, dass** das Gehäuse (40) eine Mehrzahl definierter Aufnahmezonen (33) für die Auslegerschiene (31) aufweist.

7. Rückentragvorrichtung (100) nach Anspruch 6,
**dadurch gekennzeichnet, dass** die Auslegerschiene (31) wenigstens eine Transportrolle (37) aufweist.

8. Rückentragvorrichtung (100) nach einem der vorangehenden Ansprüche,
**dadurch gekennzeichnet, dass** die Akkupackaufnahme (20) unterhalb der Schlauchführung (30) angeordnet ist.

9. Innenrüttelsystem (500) mit einer Rückentragvorrichtung (100) nach einem der vorangehenden Ansprüche und mit einem handgeführten Innenrüttler (200), der über einen elastisch verformbaren Schutzschlauch (210) mit der Rückentragvorrichtung (100) verbunden oder zu verbinden ist, wobei dem Innenrüttler (210) einen Elektromotor (230) zugeordnet ist.

10. Innenrüttelsystem (500) nach Anspruch 9,
**dadurch gekennzeichnet, dass** der Elektromotor (230) in der Rückentragvorrichtung (100) angeordnet ist und/oder der Schutzschlauch (210) eine durch den Elektromotor (230) angetriebene mechanische Antriebswelle (215) aufweist.

11. Innenrüttelsystem (500) nach Anspruch 9,
**dadurch gekennzeichnet, dass** der Elektromotor (230) in einer Rüttelflasche (220) des Innenrüttlers (200) angeordnet ist, und der Schutzschlauch (210) ein elektrisches Kabel umfasst, über welches der Elektromotor (230) mit dem Akkupack (80) verbunden ist.

12. Innenrüttelsystem (500) nach einem der Ansprüche 9 bis 11,
**dadurch gekennzeichnet, dass** das Innenrüttelsystem (500) einen in der Akkupackaufnahme (20) aufgenommenen oder aufzunehmenden Akkupack (80) aufweist, mittels dem der Elektromotor (230) des Innenrüttlers (200) elektrisch versorgt werden kann.

## Claims

1. Backpack device (100) having a support-strap unit (10) and having a rechargeable-battery-pack receptacle (20) for receiving a rechargeable-battery pack (80) for supplying energy to a hand-held internal vibrator (200), wherein the internal vibrator (200) has an elastically deformable protective tube (210),
**wherein** the backpack device (100) has a tube guide (30) by means of which the protective tube (210) can be guided in a load-transferring manner over a shoulder of a user (HK) of the backpack device (100), wherein the backpack device (100) has a housing (40) which is separate from the support-strap unit (10) and/or arranged on the support-strap unit (10),
**characterized in that** the tube guide (30) is arranged on the housing (40), wherein the tube guide (30) has an extension rail (31) which is arranged on the housing (40) preferably so as to be pivotable and/or displaceable in relation to the housing (40).

2. Backpack device (100) according to Claim 1,
**characterized in that** the tube guide (30) is configured to allow the protective tube (210) to continue to be movable along its longitudinal direction (L).

3. Backpack device (100) according to Claim 1,
**characterized in that** the tube guide (30) is integrated into the housing (40), in particular is formed in one piece with the housing (40).

4. Backpack device (100) according to Claim 3,
**characterized in that** the tube guide (30) has a preferably convex surface (OF) which preferably extends over the majority of the width (B) of the housing (40).

5. Backpack device (100) according to Claim 4,
**characterized in that** the surface (OF), in the horizontal direction (HR), is delimited on both sides by in each case one raised collar (39).

6. Backpack device (100) according to Claim 1,
**characterized in that** the housing (40) has a plurality of defined receiving zones (33) for the extension rail (31).

7. Backpack device (100) according to Claim 6,
**characterized in that** the extension rail (31) has at least one transport roller (37).

8. Backpack device (100) according to one of the preceding claims,
**characterized in that** the rechargeable-battery-pack receptacle (20) is arranged below the tube guide (30).

9. Internal-vibrator system (500) having a backpack device (100) according to one of the preceding claims, and having a hand-held internal vibrator (200) which is or is able to be connected to the backpack device (100) via an elastically deformable protective tube (210), wherein the internal vibrator (210) is assigned an electric motor (230).

10. Internal-vibrator system (500) according to Claim 9,
**characterized in that** the electric motor (230) is arranged in the backpack device (100), and/or the protective tube (210) has a mechanical drive shaft (215) which is driven by the electric motor (230).

11. Internal-vibrator system (500) according to Claim 9,
**characterized in that** the electric motor (230) is arranged in a vibrator cylinder (220) of the internal vibrator (200), and the protective tube (210) comprises an electric cable via which the electric motor (230) is connected to the rechargeable-battery pack (80).

12. Internal-vibrator system (500) according to one of Claims 9 to 11,
**characterized in that** the internal-vibrator system (500) has a rechargeable-battery pack (80) which is or is able to be received in the rechargeable-battery-pack receptacle (20) and by means of which the electric motor (230) of the internal vibrator (200) is able be provided with a supply of electricity.

## Revendications

1. Dispositif de portage dorsal (100) avec une unité de sangle de portage (10) et un logement de bloc d'accumulateurs (20) pour recevoir un bloc d'accumulateurs (80) pour l'alimentation en énergie d'un vibrateur interne (200) guidé à la main, le vibrateur interne (200) présentant un tuyau de protection (210) déformable élastiquement,
le dispositif de portage dorsal (100) présentant un guide de tuyau (30) au moyen duquel le tuyau de protection (210) peut être guidé en supportant la charge sur une épaule d'un utilisateur (HK) du dispositif de portage dorsal (100), le dispositif de portage dorsal (100) présentant un boîtier (40) différent de l'unité de sangle de portage (10) et/ou agencé sur l'unité de sangle de portage (10),
**caractérisé en ce que**
le guide de tuyau (30) est agencé sur le boîtier (40),
le guide de tuyau (30) présentant un rail en porte-à-faux (31) qui est agencé sur le boîtier (40) de préférence de manière pivotante et/ou déplaçable par rapport au boîtier (40).

2. Dispositif de portage dorsal (100) selon la revendication 1, **caractérisé en ce que** le guide de tuyau (30) est réalisé pour laisser le tuyau de protection (210) mobile le long de sa direction longitudinale (L).

3. Dispositif de portage dorsal (100) selon la revendication 1, **caractérisé en ce que** le guide de tuyau (30) est intégré dans le boîtier (40), notamment est réalisé d'une seule pièce avec le boîtier (40).

4. Dispositif de portage dorsal (100) selon la revendication 3, **caractérisé en ce que** le guide de tuyau (30) présente une surface (OF) de préférence réalisée sous forme convexe, qui s'étend de préférence sur une partie prépondérante de la largeur (B) du boîtier (40).

5. Dispositif de portage dorsal (100) selon la revendication 4, **caractérisé en ce que** la surface (OF) est limitée des deux côtés, dans la direction horizontale (HR), par un col montant (39).

6. Dispositif de portage dorsal (100) selon la revendication 1, **caractérisé en ce que** le boîtier (40) présente une pluralité de zones de réception (33) définies pour le rail en porte-à-faux (31).

7. Dispositif de portage dorsal (100) selon la revendication 6, **caractérisé en ce que** le rail en porte-à-faux (31) présente au moins un rouleau de transport (37).

8. Dispositif de portage dorsal (100) selon l'une quelconque des revendications précédentes, **caractérisé en ce que** le logement de bloc d'accumulateurs (20) est agencé en dessous du guide de tuyau (30).

9. Système de vibration interne (500) avec un dispositif de portage dorsal (100) selon l'une quelconque des revendications précédentes et avec un vibrateur interne (200) guidé à la main, qui est relié ou doit être relié au dispositif de portage dorsal (100) par l'intermédiaire d'un tuyau de protection (210) déformable élastiquement, un moteur électrique (230) étant associé au vibrateur interne (210).

10. Système de vibration interne (500) selon la revendication 9, **caractérisé en ce que** le moteur électrique (230) est agencé dans le dispositif de portage dorsal (100) et/ou le tuyau de protection (210) présente un arbre d'entraînement mécanique (215) entraîné par le moteur électrique (230).

11. Système de vibration interne (500) selon la revendication 9, **caractérisé en ce que** le moteur électrique (230) est agencé dans une aiguille vibrante (220) du vibrateur interne (200), et le tuyau de protection (210) comprend un câble électrique par l'intermédiaire duquel le moteur électrique (230) est relié au bloc d'accumulateurs (80).

12. Système de vibration interne (500) selon l'une quelconque des revendications 9 à 11, **caractérisé en ce que** le système de vibration interne (500) présente un bloc d'accumulateurs (80) logé ou à loger dans le logement de bloc d'accumulateurs (20), au moyen duquel le moteur électrique (230) du vibrateur interne (200) peut être alimenté électriquement.
